# EUROPÄISCHE PATENTSCHRIFT

(11) **EP 3 186 498 B1**
(45) Veröffentlichungstag und Bekanntmachung des Hinweises auf die Patenterteilung: **07.08.2019**
(21) Anmeldenummer: 15774550.6
(22) Anmeldetag: 24.09.2015
(51) Int. Cl.: F02C 3/04, F02C 1/06, F02C 7/10, F02C 3/34, F02C 6/18, F02C 9/18, F02C 7/08

(54) **GASTURBINENANORDNUNG**
GAS TURBINE ARRANGEMENT
ENSEMBLE DE TURBINE À GAZ

(30) Priorität: 07.10.2014 DE 102014220296
(43) Veröffentlichungstag der Anmeldung: 05.07.2017
(73) Patentinhaber: Dürr Systems AG, 74321 Bietigheim-Bissingen (DE)
(72) Erfinder: KUTNJAK, Josip, 74321 Bietigheim-Bissingen (DE); ERTEL, Urs, 71254 Ditzingen-Heimerdingen (DE); WIDENHORN, Axel, 74321 Bietigheim-Bissingen (DE)
(74) Vertreter: Söltenfuss, Dirk Christian
(86) Internationale Anmeldenummer: PCT/EP2015/071985
(87) Internationale Veröffentlichungsnummer: WO 2016/055278

(56) Entgegenhaltungen:
- WO-A1-2004/081482
- ES-A1- 2 387 724
- GB-A- 2 014 662
- US-A- 4 506 502
- US-A- 4 754 607

## Beschreibung

Die vorliegende Erfindung betrifft eine Gasturbinenanordnung, insbesondere eine Mikrogasturbinenanordnung, und insbesondere in Kraft-Wärme-Kopplungssystemen einsetzbare (Mikro-)Gasturbinenanordnungen.

Für die dezentrale Versorgung beispielsweise von Unternehmen mit elektrischer, thermischer und/oder mechanischer Energie werden zunehmend Kraft-Wärme-Kopplungssysteme eingesetzt, die mit einer Verbrennungskraftmaschine insbesondere in Form einer Mikrogasturbine betrieben werden. Solche Mikrogasturbinen sind Gasturbinen der unteren Leistungsklasse, also bis etwa 500 kW Nennleistung. Kraft-Wärme-Kopplungssysteme dieser Art weisen im Allgemeinen neben der Verbrennungskraftmaschine selbst noch einen von der Verbrennungskraftmaschine antreibbaren Kraftwandler insbesondere in Form eines elektrischen Generators sowie eine Abwärmevorrichtung für die Nutzung der im Abgas der Verbrennungskraftmaschine enthaltenen Abwärme auf.

Herkömmliche Gasturbinen arbeiten nach dem offenen Joule- oder Brayton-Kreislauf. Gasturbinen in einem Leistungsbereich unter 1 MW arbeiten wegen der sonst niedrigen Wirkungsgrade im Verdichter mit niedrigem Druckverhältnis. Aufgrund des niedrigen Druckverhältnisses entstehen durch die hohe Abgastemperatur große thermische Verluste. Die Lufttemperatur nach der Verdichtung ist im Vergleich zur Abgastemperatur jedoch niedrig. Um den elektrischen Wirkungsgrad zu erhöhen, ist es bekannt, die verdichtete Luft mit dem heißen Abgas in einem Rekuperator zu erhitzen. So muss der verdichteten Luft weniger Wärme durch die Verbrennung zugeführt werden, wodurch der elektrische Wirkungsgrad erheblich erhöht werden kann.

Herkömmliche Gasturbinenanordnungen mit Mikrogasturbinen arbeiten üblicherweise mit fixer Rekuperation. D.h. die einzelnen Komponenten der Mikrogasturbinenanordnung sind für einen vorbestimmten Betriebspunkt ausgelegt und aufeinander abgestimmt. Bei fixer Rekuperation ist jedoch die Wärmeabgabe einer Mikrogasturbine nicht steuerbar, sondern Ergebnis des Betriebspunktes. Mit sinkender elektrischer Leistung sinkt ebenfalls die thermische Abwärmeleistung, d.h. sowohl der Massenstrom als auch die Abwärmetemperatur. Die Abwärmetemperatur und die thermische Leistung im Abgas sind aber wichtige Betriebsparameter für den nachfolgenden Wärmeverbraucher oder den nachgeschalteten Prozess.

Die Wärmemenge herkömmlicher Mikrogasturbinenanordnungen kann nur durch den Betrieb der Mikrogasturbine außerhalb des Auslegungspunktes eingestellt werden. Dies hat zur Folge, dass die Komponentenwirkungsgrade und damit auch der Gesamtwirkungsgrad sinken. Außerdem werden die herkömmlichen Mikrogasturbinenanordnungen üblicherweise über die Turbinenaustrittstemperatur geregelt, welche üblicherweise in einem Bereich von 300°C bis 750°C, insbesondere zwischen 450°C und 700°C, beispielsweise bei etwa 650°C liegt.

Der Erfindung liegt daher die Aufgabe zugrunde, eine verbesserte Gasturbinenanordnung zu schaffen, welche auch außerhalb eines vorbestimmten Auslegungspunktes betrieben werden kann.

Diese Aufgabe wird gelöst durch die Lehre der unabhängigen Ansprüche. Besonders bevorzugte Ausgestaltungen der Erfindung sind Gegenstand der abhängigen Ansprüche.

Die erfindungsgemäße Gasturbinenanordnung gemäß Anspruch 1, die bevorzugt als Mikrogasturbinenanordnung ausgestaltet ist, weist auf: eine Gasturbinenvorrichtung, welche ein Brennkammersystem, eine durch einen Abgasstrom des Brennkammersystems angetriebene Turbine und einen Verdichter zum Versorgen des Brennkammersystems mit einem verdichteten Oxidationsmittelstrom aufweist; einen Rekuperator mit einem Wärmetauscher zum Übertragen zumindest eines Teils der thermischen Leistung des Abgasstroms der Turbine auf den verdichteten Oxidationsmittelstrom; wenigstens einen abgasseitigen Bypass, der einen zweiten Einlass des Rekuperators für den Abgasstrom unter Umgehung des Wärmetauschers mit einem zweiten Auslass des Rekuperators für den Abgasstrom verbindet; und wenigstens ein Steuerelement zum Einstellen des Durchflusses durch den wenigstens einen abgasseitigen Bypass. Die erfindungsgemäße Gasturbinenanordnung gemäß Anspruch 1 ist außerdem dadurch gekennzeichnet, dass der abgasseitige Bypass in den Rekuperator integriert ist; und der Rekuperator eine innere Hülle und eine die innere Hülle umgebende äußere Hülle aufweist, wobei die innere Hülle eingangsseitig mit dem zweiten Einlass des Rekuperators verbunden ist und die äußere Hülle ausgangsseitig mit dem zweiten Auslass des Rekuperators verbunden ist, und wobei der abgasseitige Bypass das Innere der inneren Hülle in axialer Richtung mit dem Inneren der äußeren Hülle verbindet.

Bei dieser Gasturbinenanordnung kann bei Bedarf zumindest ein Teil des Abgasstroms um den Wärmetauscher des Rekuperators herumgeleitet werden. Als Folge davon nimmt der umgeleitete Teil des Abgasstroms nicht an dem Wärmeaustausch im Rekuperator Teil, sodass im Ergebnis weniger Wärme vom Abgasstrom auf den Oxidationsmittelstrom übertragen wird und so die Temperatur des Abgasstroms stromab des Rekuperators erhöht werden kann. Die Gasturbinenanordnung der Erfindung kann so die abgegebene Wärmemenge beim Betrieb der Turbomaschine im Auslegungspunkt anpassen.

Das direkte Ausleiten des Abgasstroms aus der Gasturbinenanordnung (abgasseitiger Bypass), ohne durch den Rekuperator zu fließen, senkt zudem die Rekuperatortemperatur. Im Ergebnis sinkt die Temperaturbelastung des Rekuperators, wodurch seine Lebensdauer erhöht werden kann.

In einer bevorzugten Ausgestaltung der Erfindung ist wenigstens ein Steuerelement des wenigstens einen Steuerelements ein verstellbares Steuerelement und weist die Gasturbinenanordnung eine Steuereinrichtung zum variablen Ansteuern des verstellbaren Steuerelements auf. Die Abgastemperatur und/oder die abgegebene Wärmemenge der Gasturbinenanordnung können so auf einfache Weise variabel an die jeweiligen Anforderungen angepasst werden.

In einer bevorzugten Ausgestaltung der Erfindung ist wenigstens ein Steuerelement des wenigstens einen Steuerelements ein fixes Steuerelement mit einer fest vorgegebenen Durchflusseinstellung, das anwendungsspezifisch ausgewählt ist. Die Abgastemperatur und/oder die abgegebene Wärmemenge der Gasturbinenanordnung können so auf einfache Weise an die jeweiligen Bedürfnisse angepasst werden.

In einer weiteren bevorzugten Ausgestaltung der Erfindung ist der Rekuperator in axialer Richtung neben der Gasturbinenvorrichtung, d.h. koaxial zu dieser angeordnet. Die axiale Richtung bezieht sich dabei insbesondere auf eine axiale Richtung einer Turbinenwelle der Gasturbinenvorrichtung. Diese bevorzugte Anordnung des Rekuperators in Bezug auf die Gasturbinenvorrichtung ermöglicht vorzugsweise eine axiale Einströmrichtung des Oxidationsmittelstroms und des Abgasstroms in den Rekuperator und ermöglicht vorzugsweise eine Gasturbinenanlage mit vergleichsweise geringen Strömungsverlusten.

In einer alternativen bevorzugten Ausgestaltung der Erfindung kann der Rekuperator in radialer Richtung (d.h. zum Beispiel ringförmig) bevorzugt konzentrisch um die Gasturbinenvorrichtung herum angeordnet werden. In einer weiteren alternativen Ausgestaltung der Erfindung können die beiden vorgenannten Ausgestaltungsvarianten auch miteinander kombiniert werden. D.h. der Rekuperator kann teilweise in axialer Richtung neben der Gasturbinenvorrichtung und teilweise in radialer Richtung um die Gasturbinenvorrichtung herum angeordnet sein.

Gemäß der Erfindung ist der abgasseitige Bypass in den Rekuperator integriert. D.h. der abgasseitige Bypass ist vorzugsweise innerhalb eines Gehäuses oder einer äußeren Hülle des Rekuperators angeordnet und ausgebildet. So ist es vorzugsweise möglich, den abgasseitigen Bypass ohne Vergrößerung des Rekuperators, ohne Veränderung des äußeren Erscheinungsbildes des Rekuperators und ohne zusätzliche äußere Rohrleitungen zu realisieren. Als Folge davon besteht vorzugsweise auch keine Notwendigkeit, andere Komponenten der Gasturbinenanordnung oder einer die Gasturbinenanordnung enthaltenden größeren Einheit an den zusätzlichen Bypass anzupassen, zusätzliche Wärmeisolierungen vorzusehen.

In einer bevorzugten Ausgestaltung der Erfindung ist ferner wenigstens ein verdichterseitiger Bypass vorgesehen, der einen ersten Einlass des Rekuperators für den Oxidationsmittelstrom unter Umgehung des Wärmetauschers des Rekuperators mit einem ersten Auslass des Rekuperators für den Oxidationsmittelstrom verbindet.

In einer Ausgestaltung der Erfindung weist der Rekuperator vorzugsweise einen im Wesentlichen konzentrisch zu einer Turbinenwelle der Gasturbinenvorrichtung verlaufenden Diffusor auf, der eingangsseitig mit dem zweiten Einlass des Rekuperators für den Abgasstrom verbunden ist, wobei der abgasseitige Bypass stromab dieses Diffusors vorgesehen ist. In alternativen Ausgestaltungen der Erfindung können auch radiale Diffusoren vorgesehen sein oder kann auf einen Diffusor verzichtet werden.

In einer Ausgestaltung der Erfindung kann das Stellelement für den abgasseitigen Bypass vorzugsweise in den Rekuperator integriert sein. Bevorzugt weist das integrierte Stellelement einen strömungstechnisch mit einer axialen Öffnung in der inneren Hülle verbundenen Anschlussstutzen, eine in dem Anschlussstutzen angeordnete Ventilklappe und einen weiteren Anschlussstutzen, der strömungstechnisch mit einem Zwischenraum zwischen der inneren Hülle und der äußeren Hülle verbunden ist, auf.

Gegenstand der Erfindung ist auch ein Rekuperator gemäß Anspruch 7 für eine oben beschriebene Gasturbinenanordnung der Erfindung.

Gegenstand der Erfindung ist ferner ein Kraft-Wärme-Kopplungssystem gemäß Anspruch 8, das wenigstens eine oben beschriebene Gasturbinenanordnung der Erfindung aufweist. Der Nutzungsgrad eines solchen Kraft-Wärme-Kopplungssystems kann im Vergleich zu herkömmlichen Systemen deutlich verbessert werden.

Vorteilhafte Anwendungsmöglichkeiten eines solchen Kraft-Wärme-Kopplungssystems bzw. seiner Abwärmevorrichtung sind zum Beispiel Trocknungsprozesse, Dampferzeugung, Gas- und ORC-Prozesse, Gas- und Dampfprozesse und dergleichen.

Die vorliegende Erfindung kann - je nach Ausgestaltung der Gasturbinenvorrichtung und je nach Ausführungsvariante - einen oder mehrere der nachstehenden Vorteile erzielen:
- weitgehende Entkopplung der Wärmeabgabe von der elektrischen Leistungserzeugung;
- Abstimmbarkeit der Abgastemperatur angepasst an den nachfolgenden Wärmeverbraucher;
- Möglichkeit der Steuerung oder Regelung der Wärmeabgabe im Betrieb;
- durch fehlende oder zumindest nur geringe Umlenkungen der Massenströme nahezu druckverlustneutral ;
- einfache Zugänglichkeit insbesondere der Bypässe und deren Steuerelemente zur Modifikation oder Wartung;
- keine von außen sichtbaren Veränderungen;
- keine Notwendigkeit zusätzlicher Verrohrung bei abgasseitigem Bypass;
- gute Vermischung von nicht rekuperierten (heißen) Gasen ohne direkten Kontakt zu Abgasleitung;
- Führung der heißen Gase im Inneren (des Rekuperators);
- Möglichkeit der Querstrommischung (d.h. Strömungen treffen quer zueinander zusammen).

Obige sowie weitere Vorteile, Merkmale und Anwendungsmöglichkeiten der Erfindung werden aus der nachfolgenden Beschreibung von verschiedenen Ausführungsbeispielen anhand der beiliegenden Zeichnungen besser verständlich. Darin zeigen, größtenteils schematisch:
- Fig. 1: eine Blockdarstellung eines Kraft-Wärme-Kopplungssystems mit einer Gas-turbinenanordnung gemäß der vorliegenden Erfindung;
- Fig. 2: eine vereinfachte Darstellung einer bevorzugten Ausführungsform eines Rekuperators für ein Kraft-Wärme-Kopplungssystem von Fig. 1;
- Fig. 3: eine Teildarstellung eines Rekuperators einer Gasturbinenanordnung gemäß einem Ausführungsbeispiel der vorliegenden Erfindung;
- Fig. 4: eine Teildarstellung eines Rekuperators einer Gasturbinenanordnung gemäß einem ersten Vergleichsbeispiel in zwei unterschiedlichen Ansichten;
- Fig. 5: eine Teildarstellung eines Rekuperators einer Gasturbinenanordnung gemäß einem zweiten Vergleichsbeispiel in zwei unterschiedlichen Ansichten;
- Fig. 6: eine Teildarstellung eines Rekuperators einer Gasturbinenanordnung gemäß einem dritten Vergleichsbeispiel in zwei unterschiedlichen Ansichten;
- Fig. 7: eine Teildarstellung eines Rekuperators einer Gasturbinenanordnung gemäß einem vierten Vergleichsbeispiel in zwei unterschiedlichen Ansichten;
- Fig. 8: eine Teildarstellung eines Rekuperators einer Gasturbinenanordnung gemäß einem Ausführungsbeispiel der vorliegenden Erfindung in zwei unterschiedlichen Ansichten;
- Fig. 9: eine Teildarstellung eines Rekuperators einer Gasturbinenanordnung gemäß einem Ausführungsbeispiel der vorliegenden Erfindung in zwei unterschiedlichen Ansichten;
- Fig. 10: eine Teildarstellung eines Rekuperators einer Gasturbinenanordnung gemäß einem Ausführungsbeispiel der vorliegenden Erfindung in zwei unterschiedlichen Ansichten;
- Fig. 11: perspektivische Teildarstellungen eines Rekuperators einer Gasturbinenanordnung gemäß einem Ausführungsbeispiel der vorliegenden Erfindung in verschiedenen Ausführungsvarianten, jeweils im Schnitt entlang einer Längsachse des Rekuperators; und
- Fig. 12: eine Teilschnittansicht einer Anbindung des Rekuperators an die Gasturbinenvorrichtung gemäß einem Ausführungsbeispiel der vorliegenden Erfindung.

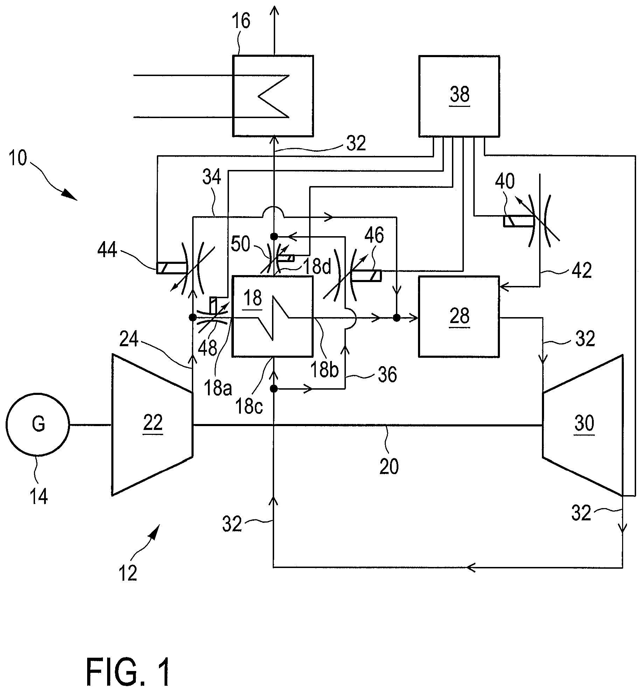

Bezug nehmend auf Fig. 1 werden zunächst beispielhaft Aufbau und Funktionsweise eines Kraft-Wärme-Kopplungssystems näher beschrieben, in dem eine erfindungsgemäße Gasturbinenanlage vorteilhaft zum Einsatz kommen kann.

Das Kraft-Wärme-Kopplungssystems 10 von Fig. 1 weist eine Gasturbinenvorrichtung 12, insbesondere eine Mikrogasturbinenvorrichtung, einen mit der Gasturbinenvorrichtung 12 antriebsverbundenen Kraftwandler 14, eine von der Gasturbinenvorrichtung 12 gespeiste Abwärmevorrichtung (z.B. Wärmetauscher) 16 und einen Rekuperator 18 auf. Die Nennleistung der Mikrogasturbinenvorrichtung 12 liegt insbesondere in einem Bereich von einschließlich 25 kW bis einschließlich 1 MW, vorzugsweise in einem Bereich zwischen 30 kW und 500 kW. Eine besonders bevorzugte Mikrogasturbinenvorrichtung 12 weist eine Nennleistung von ca. 30 kW, 60 kW, 100 kW, 200 kW, 250 kW, 300 kW oder 400 kW auf.

Die Mikrogasturbinenvorrichtung 12 ist als Ein-Wellen-Turbine mit einer zentralen und durchgehenden Turbinenwelle 20 ausgebildet und weist ferner einen auf der Turbinenwelle 20 drehfest angeordneten Verdichter 22 für einen Oxidationsmittelstrom 24, hier Verbrennungsluft, ein Brennkammersystem 28 für die Verbrennung eines Brennstoffes mit der verdichteten Verbrennungsluft sowie eine auf der Turbinenwelle 20 drehfest angeordnete und durch das Brennkammersystem 28 befeuerte Turbine 30 für die Entspannung der entstehenden komprimierten und heißen Abgase bei gleichzeitiger Gewinnung von mechanischer Energie auf. Durch die Entspannung eines aus den Abgasen gebildeten Abgasstroms 32 in der Turbine 30 wird die Turbinenwelle 20 drehend angetrieben, die ihrerseits den an der Turbinenwelle 20 angebrachten Verdichter 22 sowie den ebenfalls daran angebrachten bzw. damit antriebsverbundenen Kraftwandler 14 antreibt. Der Kraftwandler 14 ist im gezeigten Ausführungsbeispiel ein elektrischer Generator für die Gewinnung von elektrischer Energie, kann aber auch eine andere Art von Kraftmaschine beispielsweise zur Bereitstellung von mechanischer Energie oder eine Kombination von beidem sein.

Mittels des optional vorgesehenen Wärmetauschers 16 wird dem Abgasstrom 32 thermische Leistung entnommen und dem Wärmenutzer zugeführt. Bei einer Ausführung der Abwärmevorrichtung 16 ohne Wärmetauscher kann der Abgasstrom 32 auch direkt beispielsweise für einen Trocknungsprozess eingesetzt werden.

In einem ersten Betriebszustand bzw. Ausgangs- oder Normalzustand wird mittels des Verdichters 22 Verbrennungsluft aus der Umgebung angesaugt. Es kann zweckmäßig sein, diese angesaugte Verbrennungsluft gleichzeitig auch als Kühlluft für den Kraftwandler 14 einzusetzen (z. B. wenn dadurch keine weitere Kühlung des Kraftwandlers erforderlich ist). Die Verbrennungsluft wird im Verdichter 22 zu einem Verbrennungsluftstrom 24 je nach Anwendung auf 2 bar bis 8 bar verdichtet und erwärmt sich dadurch typischerweise auf Temperaturen von 100°C bis 300°C.

Der verdichtete und dadurch erwärmte Oxidationsmittelstrom 24 wird durch einen Verbrennungsluftbereich des Rekuperators 18 geleitet und dabei weiter aufgeheizt. Entsprechend der Auslegung des Rekuperators und der Bypasskonfiguration können dabei Temperaturen von typischerweise 100°C bis 850°C, insbesondere zwischen 200°C und 750°C, vorzugsweise zwischen 300°C und 650°, beispielsweise etwa 600°C bis 620°C realisiert werden. In diesem Zustand wird der Verbrennungsluftstrom 24 durch das Brennkammersystem 28 geführt, in welches über eine Brennstoffleitung 42 auch Brennstoff eingebracht wird.

Durch die Verbrennung entsteht ein Abgasstrom 32 mit erneut erhöhter Temperatur. Die Temperatur am Brennkammeraustritt bzw. dem Turbineneintritt liegt typischerweise im Bereich von 800°C bis 1.100°C. Der erste Betriebszustand kann aber beispielsweise im Falle eines geringeren mechanischen bzw. elektrischen Energiebedarfs am Kraftwandler 14 auch ein Teillastzustand mit geringerer Turbineneintrittstemperatur sein.

Der Abgasstrom 32 wird in der Turbine 30 entspannt (je nach Anwendung z.B. auf etwa 1 bar bis 2 bar), wobei seine Temperatur je nach Auslegung und Turbineneintrittstemperatur auf 600°C bis 800°C absinkt. Dieser immer noch heiße Abgasstrom 32 wird durch einen vom Verbrennungsluftbereich strömungstechnisch getrennten, jedoch wärmeübertragend verbundenen Abgasbereich des Rekuperators 18 geleitet. Hierbei findet ein Wärmeübergang vom Abgasstrom 32 auf den Verbrennungsluftstrom 24 statt, wobei der Verbrennungsluftstrom 24 wie oben beschrieben aufgeheizt wird, und wobei der Abgasstrom 32 weiter auf eine Nutztemperatur entsprechend des jeweiligen Anwendungsfalls von typischerweise 200°C bis 750°C abgekühlt wird.

Nach dem Durchlaufen des Rekuperators 18 wird der Abgasstrom 32 zu der stromab positionierten Abwärmevorrichtung 16 mit dem optionalen Wärmetauscher geführt, wo eine erste thermische Leistung an der Abwärmevorrichtung 16 bereitgestellt wird, und wo mittels der Abwärmevorrichtung 16 je nach Bedarf die im auf Nutztemperatur abgekühlten Abgasstrom 32 noch enthaltene Abwärme abgeführt und als thermische Energie nutzbar gemacht werden kann. Gleichzeitig wird im hier beschriebenen ersten Betriebszustand eine erste mechanische Leistung an der Abtriebsvorrichtung, hier am Kraftwandler 14 bereitgestellt, im Generator in elektrische Leistung umgewandelt, und dem Nutzer zugeführt.

Wie in Fig. 1 dargestellt, sind zudem ein verdichterseitiger Bypass 34 und ein abgasseitiger Bypass 36 vorgesehen. Wahlweise kann auch nur der abgasseitige Bypass 36 vorgesehen sein. Mit Hilfe des verdichterseitigen Bypasses 34 kann zumindest ein Teil des verdichteten Verbrennungsluftstroms 24 an einem Wärmetauscher des Rekuperators 18 (in Fig. 1 an dem gesamten Rekuperator 18) vorbei geleitet und direkt dem Brennkammersystem 28 zugeleitet werden. Mit Hilfe des abgasseitigen Bypasses 36 kann zumindest ein Teil des Abgasstroms 32 an einem Wärmetauscher des Rekuperators 18 (in Fig. 1 an dem gesamten Rekuperator 18) vorbei geleitet werden.

Zur Steuerung bzw. Regelung der Massenströme in dem Kraft-Wärme-Kopplungssystem 10 ist zudem eine Steuereinrichtung 38 vorgesehen, welche ein Steuerelement 40 zum Steuern des Durchflusses durch die Brennstoffleitung 42, ein Steuerelement 44 zum Steuern des Durchflusses durch den verdichterseitigen Bypass 34, ein Steuerelement 46 zum Steuern des Durchflusses durch den abgasseitigen Bypass 36, ein Steuerelement 48 zum Steuern des Verbrennungsluftstroms 24 in den Rekuperator 18 und ein Steuerelement 50 zum Steuern des Abgasstroms 32 durch den Rekuperator 18 ansteuert. Die Steuerelemente 40, 48, 50 weisen zum Beispiel jeweils ein Steuerelement in Form eines Steuerventils oder einer Steuerdrossel auf. Die Steuerelemente 44, 46 der beiden Bypässe 34, 36 können wahlweise als ansteuerbare Steuerelemente mit variablem Durchlass oder als fixe Steuerelemente mit festem Durchlass ausgebildet sein, und sie werden weiter unten anhand verschiedener Ausführungsbeispiele in mehr Einzelheiten beschrieben.

Mit Hilfe der Bypässe 34, 36 können die Gasturbinenvorrichtung 12 und damit das gesamte Kraft-Wärme-Kopplungssystem 10 mit einem besseren Nutzungsgrad betrieben werden.

Für den Fall, dass bei gleichbleibender elektromechanischer Energieabnahme am Kraftwandler 14 im Vergleich zum vorstehend beschriebenen Ausgangszustand ein veränderter Wärmebedarf am Wärmetauscher 16 eintritt, kann ein zweiter Betriebszustand herbeigeführt werden, wozu die Temperatur des Abgasstroms 32 im Bereich der Abwärmevorrichtung 16 verändert wird. Bei Erhöhung des Nutzwärmebedarfs an der Abwärmevorrichtung 16 gegenüber dem oben beschriebenen ersten Betriebszustand wird die Abgastemperatur des Abgasstroms 32 durch Erhöhung des Durchflusses der Verbrennungsluft durch den verdichterseitigen Bypass 34 erhöht. Hierzu wird das Steuerelement 44 über die Steuereinrichtung 38 je nach Bedarf teilweise oder ganz geöffnet, in dessen Folge ein mehr oder weniger ausgeprägter Teilstrom des Verbrennungsluftstroms 24, bei voll geöffnetem Steuerelement 44 sogar näherungsweise der gesamte Verbrennungsluftstrom 24 nicht durch den Verbrennungsluftbereich des Rekuperators 18, sondern um diesen herum geleitet wird. In der Folge wird dem Abgasstrom 32 im Rekuperator 18 nur noch eine verringerte oder gar keine Wärmemenge mehr entnommen.

Durch das weitere Steuerelement 48 kann der Durchfluss des Verbrennungsluftstroms 24 durch den Verbrennungsluftbereich des Rekuperators 28 gedrosselt oder sogar ganz unterbunden werden, um eine bestimmte Durchflussmenge durch den verdichterseitigen Bypass 34 zu erzwingen.

Das Steuerelement 48 ist - wie hier gezeigt - bevorzugt eingangsseitig des Rekuperators 28 angeordnet, kann aber auch ausgangsseitig davon positioniert sein.

Für eine bedarfsweise Erhöhung der Temperatur des Abgasstroms 32 wird der abgasseitige Bypass 36 genutzt. So kann die Abgastemperatur des Abgasstroms 32 durch Erhöhung des Abgasdurchflusses durch den abgasseitigen Bypass 36 erhöht werden. Hierzu wird das Steuerelement 46 über die Steuereinrichtung 38 je nach Bedarf teilweise oder ganz geöffnet, in dessen Folge ein mehr oder weniger ausgeprägter Teilstrom des Abgasstroms 32, bei voll geöffnetem Steuerelement 46 sogar näherungsweise der gesamte Abgasstrom 32 nicht durch den Abgasbereich des Rekuperators 28, sondern um diesen herum geleitet wird. Auch auf diese Weise wird in der Folge dem Abgasstrom 32 im Rekuperator 28 nur noch eine verringerte oder gar keine Wärmemenge mehr entnommen.

Durch das weitere Steuerelement 50 kann der Durchfluss des Abgasstroms 32 durch den Abgasbereich des Rekuperators 18 gedrosselt oder sogar ganz unterbunden werden, um eine bestimmte Durchflussmenge durch den Bypass 36 zu erzwingen.

Das Steuerelement 50 ist - wie hier gezeigt - bevorzugt ausgangsseitig des Rekuperators 18 angeordnet, kann aber auch eingangsseitig davon positioniert sein.

Die beiden Bypässe 34, 36 bzw. deren Steuerelemente 44, 46 können wahlweise wechselseitig oder in Kombination miteinander betrieben werden.

Für die Herbeiführung des zweiten Betriebszustandes ist es alternativ zur oder insbesondere in Kombination mit der oben beschriebenen Änderung des Durchflusses durch die Bypässe 34, 36, und bevorzugt im Wesentlichen synchron mit der Veränderung des Durchflusses durch die Bypässe 34, 36 möglich, mittels des Steuerelements 40 in der Brennstoffleitung 42 auch den in das Brennkammersystem 28 eingeleiteten Brennstoffmassenstrom zu verändern.

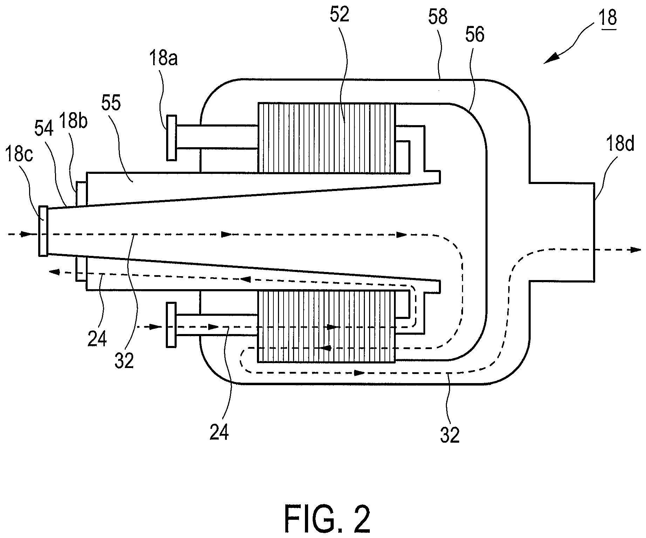

Fig. 2 veranschaulicht den Aufbau einer bevorzugten Ausführungsform eines Rekuperators 18, wie er in einem Kraft-Wärme-Kopplungssystem von Fig. 1 eingesetzt werden kann. Zwecks besserer Übersichtlichkeit sind in Fig. 2 keine Bypässe 34, 36 dargestellt.

Der Rekuperator 18 ist in diesem Ausführungsbeispiel in axialer Richtung neben der Gasturbinenvorrichtung 12 angeordnet. Mit anderen Worten verläuft die Längsachse des Rekuperators 18 (in Links/Rechts-Richtung in Fig. 2) im Wesentlichen koaxial zur Turbinenwelle 20 der Gasturbinenvorrichtung 12 oder nur leicht parallel versetzt zu dieser.

Der Rekuperator 18 weist einen Diffusor 54, dessen zentraler Einströmkanal 54a im Wesentlichen koaxial zur Turbinenwelle 20 der Gasturbinenvorrichtung 12 verläuft, und einen den Diffusor 54 ringförmig umgebenden Wärmetauscher 52 auf. Diffusor 54 und Wärmetauscher 52 sind innerhalb einer äußeren Hülle 58 angeordnet, welche ein Gehäuse des Rekuperators 18 bildet. Zur Ausbildung der Strömungskanäle für den Abgasstrom 32 ist innerhalb der äußeren Hülle 58 zudem eine innere Hülle 56 vorgesehen.

Der Oxidationsmittelstrom 24 und der Abgasstrom 32 werden strömungstechnisch voneinander getrennt durch den Rekuperator 18 geleitet. Zu diesem Zweck ist der Diffusor 54 eingangsseitig mit einem zweiten Einlass 18c des Rekuperators 18 für den Abgasstrom 32 verbunden. Stromab des Diffusors 54 wird der Abgasstrom 32 durch die innere Hülle 56 umgelenkt und in den Wärmetauscher 52 geleitet. Nach Durchströmen des Wärmetauschers 52 wird der Abgasstrom nochmals umgelenkt und wird schließlich durch einen axialen zweiten Auslass 18d des Rekuperators 18 an einer der Gasturbinenvorrichtung 12 abgewandten Seite (rechts in Fig. 2) ausgegeben. Die äußere Hülle 58 weist an ihrer der Gasturbinenvorrichtung 12 zugewandten Seite (links in Fig. 2) einen ersten Einlass 18a für den Oxidationsmittelstrom 24 auf, der mit dem Wärmetauscher 52 verbunden ist. Nach Durchströmen des Wärmetauschers 52 wird der Oxidationsmittelstrom 24 in einen Ringspalt 55 des Diffusors 54 geleitet und in diesem zu einem ersten Auslass 18b des Rekuperators 18 auf der der Gasturbinenvorrichtung 12 zugewandten Seite des Rekuperators 18 geleitet.

Im Wärmetauscher 52 des Rekuperators 18 gibt der im Brennkammersystem 28 aufgeheizte Abgasstrom 32 einen Teil seiner thermischen Energie an den verdichteten Oxidationsmittelstrom 24 ab. Oxidationsmittelstrom 24 und Abgasstrom 32 durchströmen den Wärmetauscher 52 in diesem Ausführungsbeispiel gegenläufig.

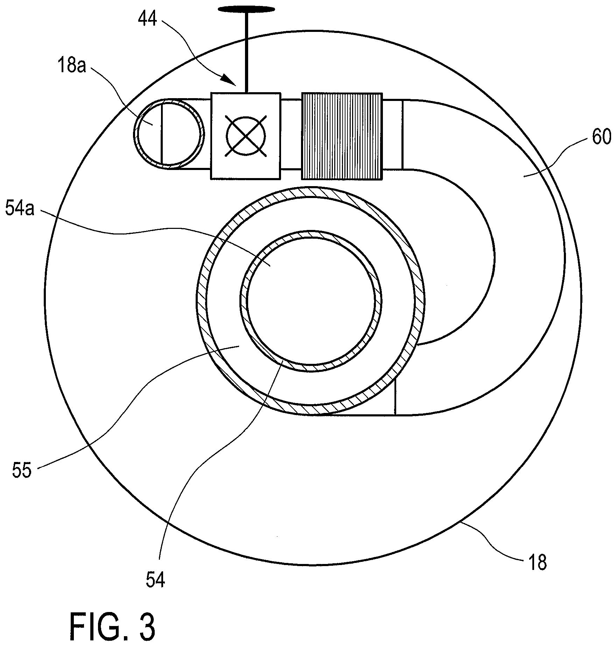

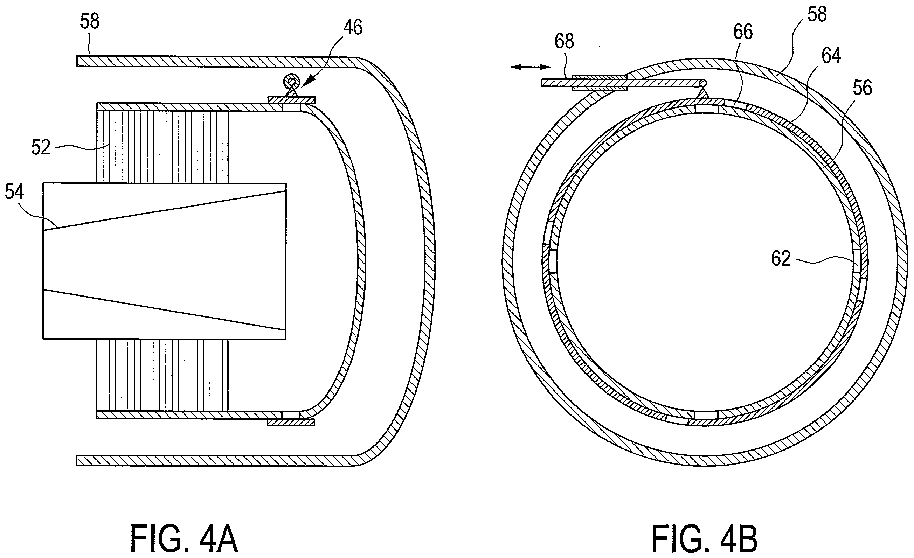

Bezug nehmend auf Fig. 3 bis 11 werden nun verschiedene Ausführungsformen einer die Gasturbinenvorrichtung 12 und den Rekuperator 18 umfassenden Gasturbinenanordnung und insbesondere deren Bypässe 34, 36 näher beschrieben. Der Rekuperator 18 ist dabei jeweils vorzugsweise wie der in Fig. 2 veranschaulichte Rekuperator 18 aufgebaut. Während Fig. 3, 8-10 Ausführungsbeispiele gemäß der Erfindung zeigen, zeigen Fig. 4-7 Vergleichsbeispiele, die nicht in den Schutzbereich der Ansprüche fallen.

Fig. 3 zeigt ein Ausführungsbeispiel mit einem verdichterseitigen Bypass 34.

In dem Ausführungsbeispiel von Fig. 3 ist der erste Einlass 18a des Rekuperators 18 über ein Verbindungsrohr 60 direkt, d.h. unter Umgehung des Wärmetauschers 52, mit dem Ringspalt 55 des Diffusors 54 verbunden. Bei einer solchen Rohrverbindung zwischen dem Verdichterauslass und dem zum Brennkammersystem 28 führenden Ringspalt wird die Massenstromaufteilung bevorzugt mittels einer eingesetzten Blende oder eines Ventilelements (Ventil, Klappe, Schieber oder dergleichen) eingestellt. Das Verbindungsrohr 60 ist vorzugsweise zu isolieren, da es sonst zu Wärmeverlusten kommt bzw. die hohe Temperatur einen Berührschutz erforderlich macht.

Sollte der Bypassmassenstrom mit voll geöffnetem Bypassventil 44 nicht ausreichen, kann es erforderlich sein, ein zusätzliches Drosselventil am Verdichtereinlass 18a des Rekuperators 18 anzubringen. Hierdurch kann der Massenstrom bei voll geöffnetem Bypassventil 44 weiter erhöht werden.

Anstelle des in Fig. 3 dargestellten verstellbaren Steuerelements 44 kann der verdichterseitige Bypass 34 auch ein fixes Steuerelement mit fest vorgegebener Durchlassöffnung wie zum Beispiel eine Blende, eine Lochblende, ein Lochmuster oder dergleichen aufweisen.

Fig. 4 bis 11 zeigen verschiedene Ausführungsformen mit einem abgasseitigen Bypass 36.

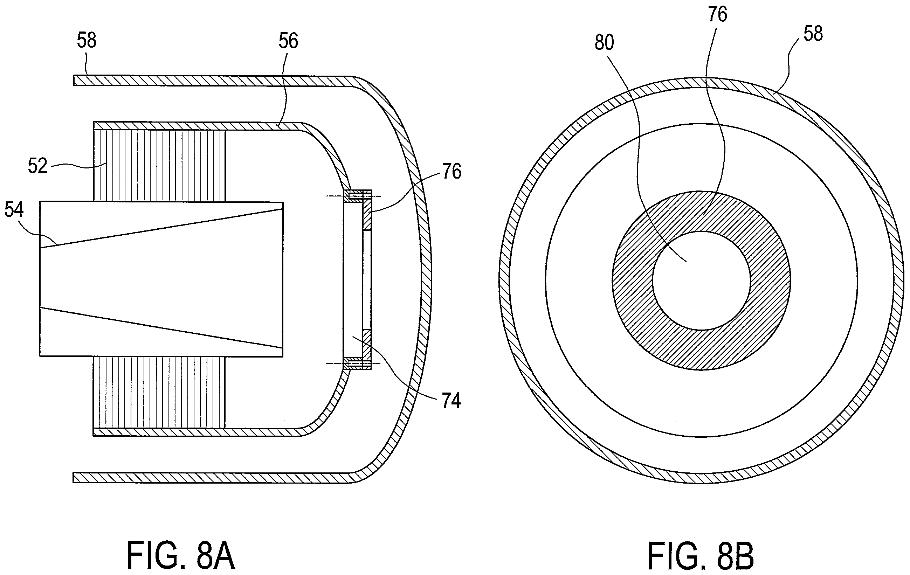

Der abgasseitige Bypass 36 wird bevorzugt stromab des Diffusors 54 im Rekuperator 18 realisiert. Dabei sind sowohl radiale Öffnungen 62 in der inneren Hülle 56 (vgl. Vergleichsbeispiele der Fig. 4 bis 7) als auch axiale Öffnungen 74 in der inneren Hülle (vgl. erfindungsgemäße Ausführungsbeispiele der Fig. 8 bis 11) möglich. Beide Varianten können mittels fixen Steuerelementen (Blenden, Lochblenden, Lochmustern, etc.) oder verstellbaren Steuerelementen (Ventile, Klappen) ausgeführt werden.

In dem Vergleichsbeispiel von Fig. 4A und 4B sind in der inneren Hülle 56 stromab des Diffusors 54 mehrere radiale Öffnungen 62 vorgesehen. Diese bilden einen abgasseitigen Bypass 36, durch den der Abgasstrom 32 zumindest teilweise an dem Wärmetauscher 52 vorbei vom Diffusor 54 direkt in den Innenraum der äußeren Hülle 58 und von dort zum zweiten Auslass 18d strömen kann.

Das variable Steuerelement 46 weist in dem Beispiel von Fig. 4A und 4B ein Ringelement in Form eines Drehringes 64 auf, der das Lochmuster 62 in der inneren Hülle 56 in Umfangsrichtung umgibt und mittels einer Stellstange (Schub/Zugstange, etc.) 68 in Umfangsrichtung bewegbar ist. Der Drehring 64 hat ebenfalls mehrere, beliebig geformte Öffnungen 66, welche die Öffnungen 62 der inneren Hülle 56 teilweise oder vollständig überdecken können. Durch Verdrehen des Drehringes 64 mittels der Stellstange 68 kann der freigegebene Strömungsquerschnitt des Bypasses 36 variiert werden. Vorteilhaft ist die externe Verstellmöglichkeit ohne Änderungen an der thermischen Isolierung, und die gute Vermischung des heißen und kalten Abgasstroms durch Quervermischung.

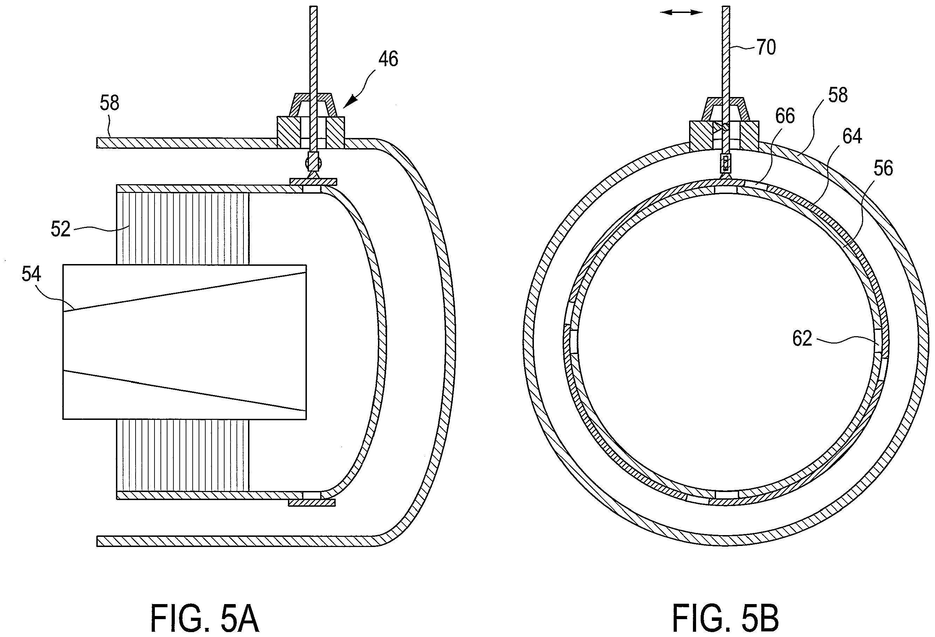

Das in Fig. 5A und 5B gezeigte Vergleichsbeispiel unterscheidet sich von dem Beispiel von Fig. 4A und 4B durch die Art des Steuerelements 46. In dem Beispiel von Fig. 5A und 5B weist das Steuerelement 46 anstelle der Stellstange 68 einen Stellhebel 70 zum Verdrehen des Drehringes 64 auf. Im Übrigen entspricht der Aufbau des Rekuperators 18 von Fig. 5A und 5B jenem von Fig. 4A und 4B.

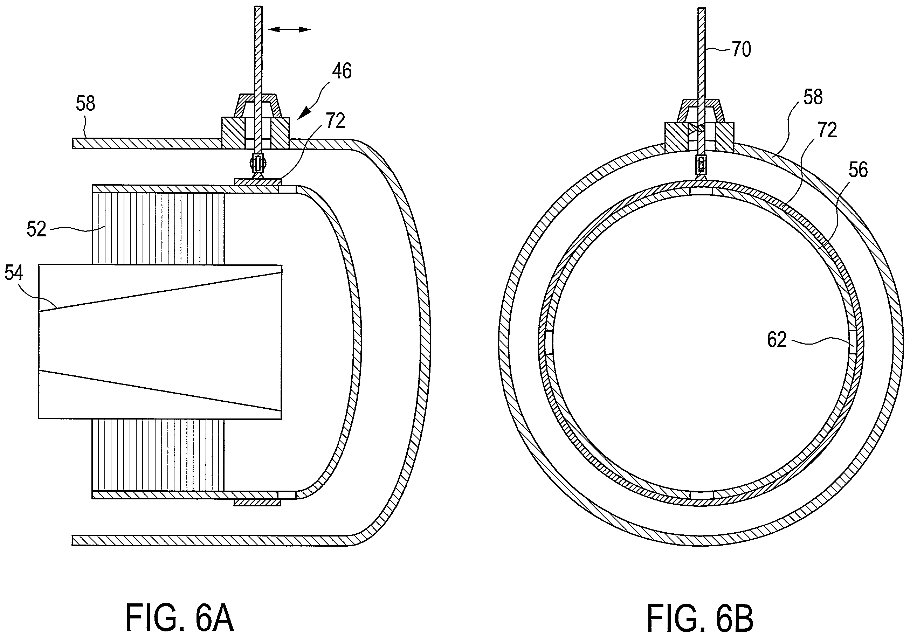

Das in Fig. 6A und 6B gezeigte Vergleichsbeispiel unterscheidet sich von dem Beispiel von Fig. 4A und 4B ebenfalls durch die Art des Steuerelements 46. In dem Beispiel von Fig. 6A und 6B weist das Steuerelement 46 anstelle des in Umfangsrichtung bewegbaren Drehringes 64 einen in axialer Richtung bewegbaren Schiebering 72 auf. Im Gegensatz zum Drehring 64 weist der Schiebering 72 kein Lochmuster auf. Zum Verschieben des Schieberinges 64 weist das Steuerelement einen Stellhebel 70 auf. Im Übrigen entspricht der Aufbau des Rekuperators 18 von Fig. 6A und 6B jenem von Fig. 4A und 4B.

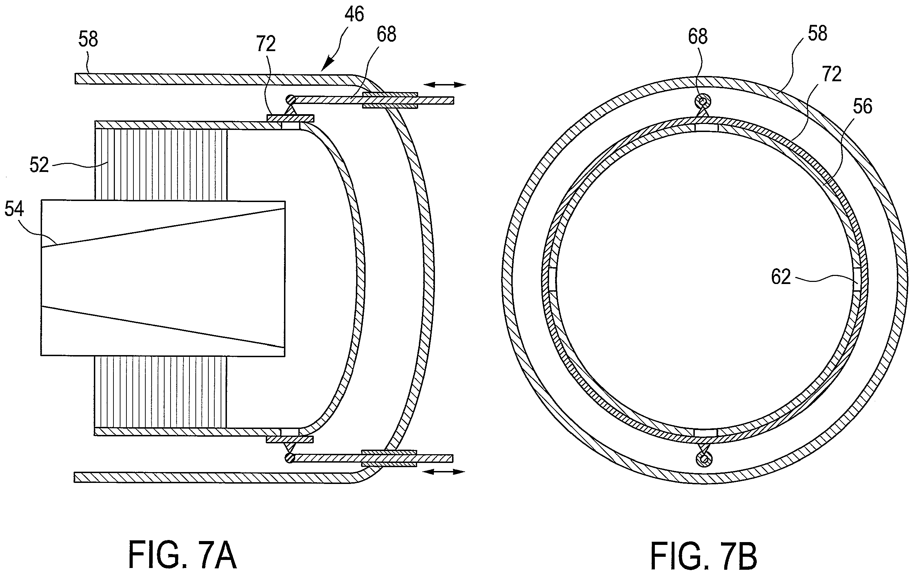

Das in Fig. 7A und 7B gezeigte Vergleichsbeispiel unterscheidet sich von dem Beispiel von Fig. 6A und 6B dadurch, dass anstelle des Stellhebels 70 eine in axialer Richtung betätigbare Stellstange 68 (Schub/Zugstange) vorgesehen ist. Im Übrigen entspricht der Aufbau des Rekuperators 18 von Fig. 7A und 7B jenem von Fig. 6A und 6B.

Während in den Beispielen von Fig. 4 bis 7 die mehreren radialen Öffnungen 62 in der inneren Hülle 56 des Rekuperators 18 jeweils durch ein gemeinsames Steuerelement 46 geöffnet und geschlossen werden können, ist es in anderen Ausführungsformen auch möglich, mehrere separate Steuerelemente vorzusehen, die jeweils einzelne radiale Öffnungen 62 oder einzelne Gruppen von radialen Öffnungen 62 öffnen und schließen können. Die mehreren Steuerelemente werden vorzugsweise synchron angesteuert.

Bei den Ausführungsformen mit radialen Öffnungen 62 liegt deren Durchgangsfläche insgesamt in einem Bereich von etwa 0,025 m² bis 0,035 m², beispielsweise bei etwa 0,031 m². Die Durchgangsflächen der einzelnen radialen Öffnungen 62 können dabei wahlweise im Wesentlichen gleich groß oder unterschiedlich zueinander sein. Die Anzahl der radialen Öffnungen 62 liegt vorzugsweise im Bereich von 4 bis 100.

Konkrete Beispiele des Rekuperators 18 enthalten zum Beispiel 4 radiale Öffnungen 62 mit einem Durchmesser von etwa 100 mm, 16 radiale Öffnungen 62 mit einem Durchmesser von etwa 50 mm, oder 64 radiale Öffnungen 62 mit einem Durchmesser von etwa 25 mm.

Bei den Ausführungsformen des Rekuperators 18 mit radialen Öffnungen 62 in der inneren Hülle 56 kann durch die Querströmung in radialer Richtung und die zwei Strömungsumlenkungen eine gute Vermischung von kälteren und wärmeren Teilluftströmen erzielt werden.

In dem Ausführungsbeispiel von Fig. 8A und 8B ist in der inneren Hülle 56 stromab des Diffusors 54 eine zentrale axiale Öffnung 74 vorgesehen. Diese bildet einen abgasseitigen Bypass 36, durch den der Abgasstrom 32 zumindest teilweise an dem Wärmetauscher 52 vorbei vom Diffusor 54 direkt in den Innenraum der äußeren Hülle 58 und von dort zum zweiten Auslass 18d strömen kann.

Das fixe Steuerelement 46 weist in dem Ausführungsbeispiel von Fig. 8A und 8B einen Befestigungsring an der Öffnung 74 der inneren Hülle 56 auf, in dem im einfachsten Fall eine Lochblende 76 eingesetzt ist. Diese Lochblende 76 ist vorzugsweise austauschbar, um den Strömungsquerschnitt durch den Bypass 36 anpassen zu können. Eine Veränderung der Massenstromaufteilung von außen ist in diesem Ausführungsbeispiel nicht möglich. Der Abgasstrom 32 fließt hier vom Diffusor 54 ohne Umlenkung direkt zum zweiten Auslass 18d und von diesem in die Abgasleitung stromab des Rekuperators 18.

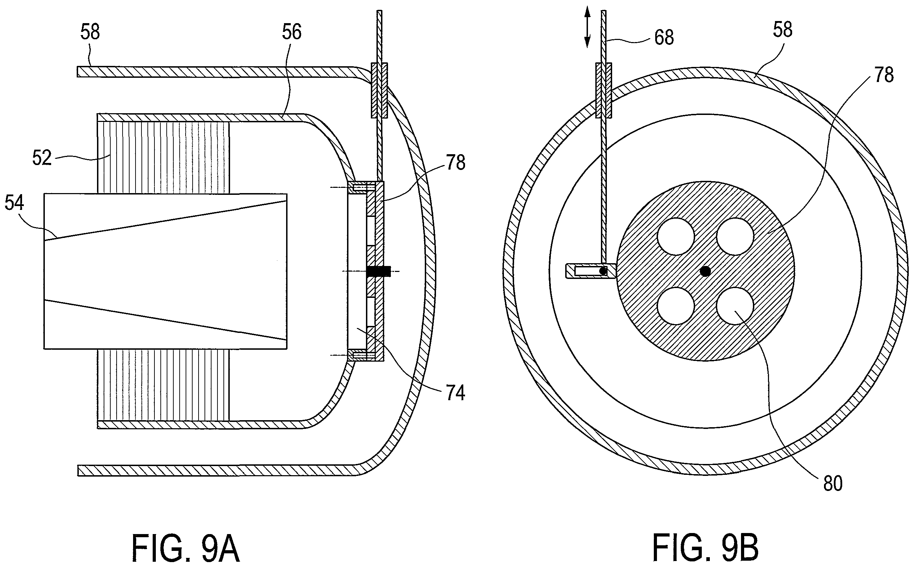

Das in Fig. 9A und 9B gezeigte Ausführungsbeispiel unterscheidet sich von dem Ausführungsbeispiel von Fig. 8A und 8B durch die Art des Steuerelements 46. In dem Ausführungsbeispiel von Fig. 9A und 9B weist das Steuerelement 46 anstelle des fixen Steuerelements in Form einer Lochblende 76 ein veränderbares Steuerelement 46 in Form einer Drehlochblende 78 auf, die mittels einer Stellstange drehbar ist, um die Öffnungen 80 mit Öffnungen in einer Lochblende wahlweise zur Deckung zu bringen. Im Übrigen entspricht der Aufbau des Rekuperators 18 von Fig. 9A und 9B jenem von Fig. 8A und 8B.

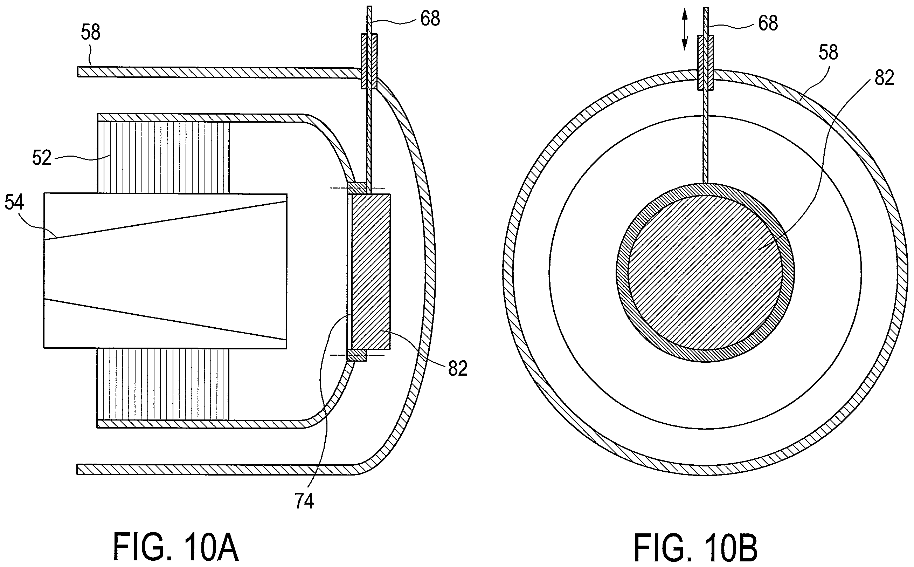

Das in Fig. 10A und 10B gezeigte Ausführungsbeispiel unterscheidet sich von dem Ausführungsbeispiel von Fig. 8A und 8B ebenfalls durch die Art des Steuerelements 46. In dem Ausführungsbeispiel von Fig. 10A und 10B weist das Steuerelement 46 anstelle des fixen Steuerelements in Form einer Lochblende 76 ein veränderbares Steuerelement in Form eines Ventilelements (Ventil, Klappe, Schiebeventil, Schlitzscheibe, etc.) 82 auf, das mittels einer Stellstange wahlweise geöffnet oder geschlossen werden kann. Im Übrigen entspricht der Aufbau des Rekuperators 18 von Fig. 10A und 10B jenem von Fig. 8A und 8B.

Bei den Ausführungsformen mit axialen Öffnungen 74 in der inneren Hülle 56 des Rekuperators 18 liegt deren Durchgangsfläche insgesamt in einem Bereich von etwa 0,025 m² bis 0,035 m², beispielsweise bei etwa 0,031 m². Die Durchgangsflächen der einzelnen axialen Öffnungen 74 können dabei wahlweise im Wesentlichen gleich groß oder unterschiedlich zueinander sein. Die Anzahl der axialen Öffnungen 74 liegt vorzugsweise im Bereich von 4 bis 100.

Konkrete Ausführungsbeispiele des Rekuperators 18 enthalten zum Beispiel 4 axiale Öffnungen mit einem Durchmesser von etwa 100 mm, 16 axiale Öffnungen 74 mit einem Durchmesser von etwa 50 mm, oder 64 axiale Öffnungen 74 mit einem Durchmesser von etwa 25 mm.

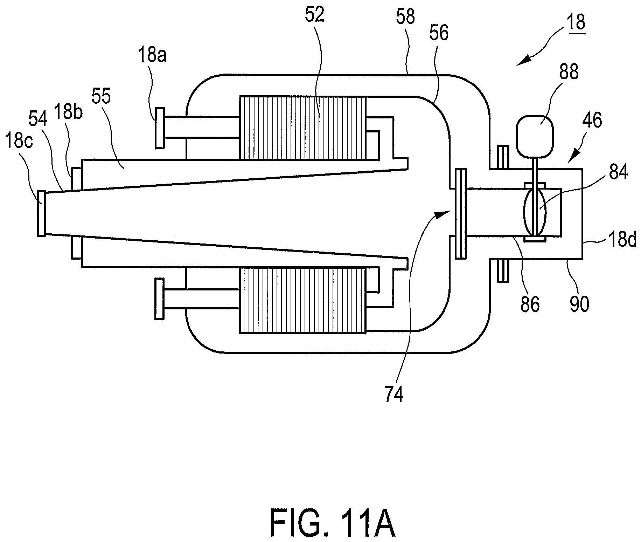

Fig. 11A bis D zeigen verschiedene Ausführungsvarianten eines in den Rekuperator 18 integrierten Steuerelements 46 für den abgasseitigen Bypass 36 für den Fall einer axialen Öffnung 74 in der inneren Hülle 56 des Rekuperators.

Wie in Fig. 11A dargestellt, weist die innere Hülle 56 des Rekuperators 18 eine axiale Öffnung 74 auf, die im Wesentlichen koaxial zur Längsachse des Diffusors 54 ausgerichtet ist. Das Stellelement 46 für den abgasseitigen Bypass 36 ist als Ventilelement mit einer Ventilklappe 84 ausgestaltet. Das Stellelement 46 weist insbesondere einen strömungstechnisch mit der axialen Öffnung 74 verbundenen Anschlussstutzen 86, die in dem Anschlussstutzen 86 angeordnete Ventilklappe 84 und einen mit der Steuereinrichtung 38 verbundenen Stellantrieb 88 zum Verstellen der Ventilklappe 84 auf. Das Stellelement 46 weist ferner einen weiteren Anschlussstutzen 90 auf, der im Wesentlichen koaxial zum Anschlussstutzen 86 angeordnet ist und strömungstechnisch mit dem Zwischenraum zwischen innerer Hülle 56 und äußerer Hülle 58 des Rekuperators 18 verbunden ist. Der weitere Anschlussstutzen 90 dient zugleich als Montagehilfe für den Stellantrieb 88 der Ventilklappe 84.

In der Ausführungsform von Fig. 11A ist der Anschlussstutzen 86 des Stellelements 46 an die axiale Stirnseite der inneren Hülle 56 um die axiale Öffnung 74 herum angeflanscht.

Ferner ist in der Ausführungsform von Fig. 11A das stromabwärtige Ende des Anschlussstutzens 86 offen ausgestaltet, sodass der durch das Ventilelement des Bypasses 36 geströmte Abgasstrom 32 stirnseitig aus dem Anschlussstutzen 86 austreten und sich gegebenenfalls mit dem nicht durch den Bypass 36, sondern durch den Wärmetauscher 52 des Rekuperators 18 geströmten wärmeren Abgasstrom 32 vermischen kann, bevor der Abgasstrom 32 den Rekuperator 18 verlässt.

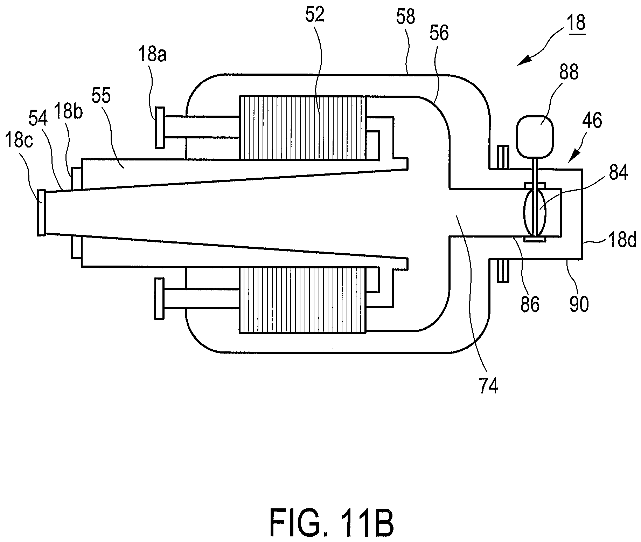

Die in Fig. 11B dargestellte Ausführungsform des Stellelements 46 unterscheidet sich von jener der in Fig. 11A dargestellten Ausführungsform dadurch, dass der Anschlussstutzen 86 des Stellelements 46, in dem die Ventilklappe 84 angeordnet ist, in die axiale Öffnung 74 in der inneren Hülle 56 des Rekuperators 18 eingeschweißt ist.

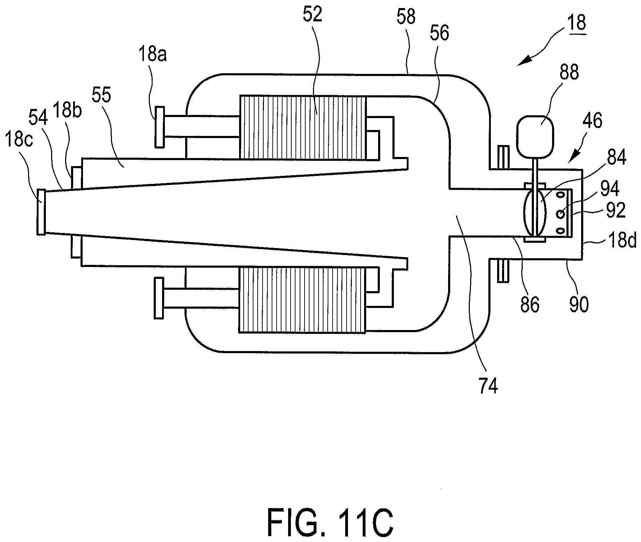

Die in Fig. 11C dargestellte Ausführungsform des Stellelements 46 unterscheidet sich von jener der in Fig. 11B dargestellten Ausführungsform dadurch, dass das stromabwärtige Ende des Anschlussstutzens 86 mit einem Verschluss 92 verschlossen ist und dass der Anschlussstutzen 86 stromab der Ventilklappe 84 mehrere, umfänglich verteilte radiale Ausströmöffnungen 94 aufweist. Durch die radiale Querstromeinmischung des durch das Ventilelement des Bypasses 36 geströmten kälteren Abgasstroms 32 kann eine verbesserte Vermischung mit dem nicht durch den Bypass 36, sondern durch den Wärmetauscher 52 des Rekuperators 18 geströmten 0 wärmeren Abgasstrom 32 erzielt werden.

In einer weiteren Ausführungsform (nicht dargestellt) können die Ausführungsformen der Fig. 11A und 11C auch miteinander kombiniert werden. D.h. das in Fig. 11C dargestellte Stellelement 46 kann auch an die axiale Öffnung 74 in der inneren Hülle 56 des Rekuperators 18 angeflanscht werden.

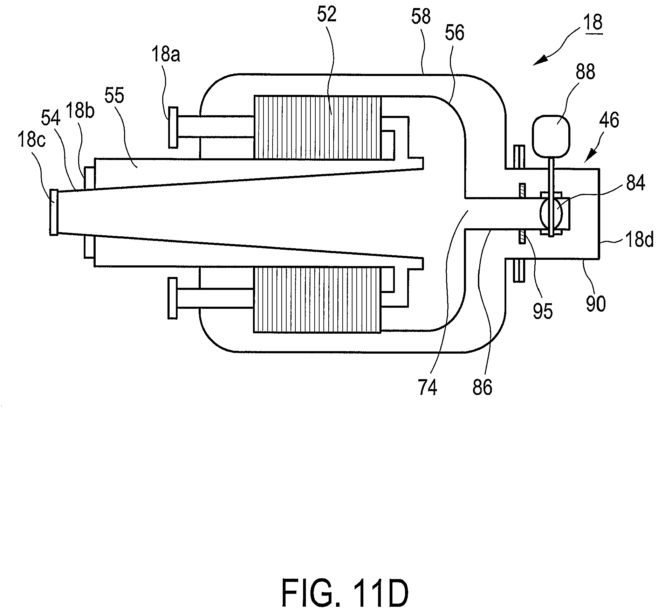

Die in Fig. 11D dargestellte Ausführungsform des Stellelements 46 unterscheidet sich von jener der in Fig. 11B dargestellten Ausführungsform dadurch, dass der Strömungsdurchmesser des Anschlussstutzens 86 kleiner dimensioniert ist. Mit einem kleiner dimensionierten Ventil können kleinere Leckageraten erzielt und die Regelgüte insbesondere bei einer Temperaturerhöhung des Abgasstroms 32 verbessert werden. Um den Massenstrom durch das Ventilelement 46 zu erhöhen, ist bei dieser Ausführungsform vorzugsweise zudem der entsprechend breitere, ringförmige Zwischenraum zwischen dem Anschlussstutzen 86 und dem weiteren Anschlussstutzen verengt. In der Ausführungsform von Fig. 11D wird diese Verengung durch eine Drosselblende erreicht, die radial um den Anschlussstutzen 86 herum angeordnet ist.

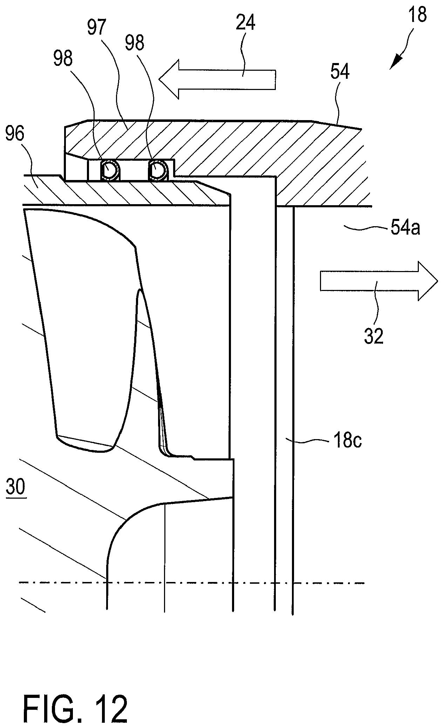

Fig. 12 zeigt schließlich eine Ausführungsform für eine Anbindung des Rekuperators 18 an die Gasturbinenvorrichtung 12, bei welcher der Rekuperator 18 in axialer Richtung der Turbinenwelle 20 der Gasturbinenvorrichtung neben der Gasturbinenvorrichtung 12 angeordnet ist.

Wie in Fig. 12 dargestellt, weist die Turbine 30 der Gasturbinenvorrichtung 12 in ihrem stromabwärtigen Endbereich umfänglich eine Gegenkontur 96 auf, auf welche ein umfänglicher, axial vorstehender Wandvorsprung 97 des Diffusors 54 des Rekuperators 18 in axialer Richtung, d.h. parallel zur Achse der Turbinenwelle 20 aufgeschoben wird (so genannter Schiebesitz). Um eine Leckage zwischen dem vom Rekuperator 18 aufgeheizten Verbrennungsluftstrom 24 und dem Abgasstrom 32 zu verhindern, ist zwischen der Gegenkontur 96 der Turbine 30 und dem Wandvorsprung 97 des Diffusors 54 eine radiale Abdichtung vorgesehen, die vorzugsweise eine quasistatische Dichtung bildet. In dem Ausführungsbeispiel von Fig. 12 weist diese radiale Abdichtung zwei in axialer Richtung hintereinander angeordnete C-Ring-Dichtungen 98, bevorzugt aus Metall auf. In anderen Ausführungsformen der Erfindung kann die radiale Abdichtung auch andere Dichtelemente aufweisen, wie beispielsweise Lamellendichtringe, Labyrinthdichtungen, Bürstendichtungen, O-Ring-Dichtungen und dergleichen.

Beim Einsatz von anderen Gasturbinenanordnungen und deren Rekuperatoren 18, die nicht dem in Fig. 2 dargestellten Aufbau entsprechen, sind entsprechend andere Konstruktionen für die Bypässe 34, 36 und deren Steuerelemente 44, 46 möglich.

So kann zum Beispiel bei einem ringförmig außerhalb der Gasturbinenvorrichtung 12 angeordneten Rekuperator 18 verdichterseitig ein Teilmassenstrom auf der Innenseite des Rekuperators 18 zum Brennkammersystem 28 geführt werden. Zur Einstellung des Massenstroms können ebenfalls verschiedene Öffnungsmuster (Bohrbilder) verwendet werden. Abgasseitig kann der Bypass 36 zum Beispiel mittels einer Verrohrung zwischen Abgaskamin und Diffusoraustritt oder mittels eines ringförmigen Kanals um den Kern des Rekuperators ausgeführt werden. Zur Einstellung des Bypassmassenstroms können hier ebenfalls radiale Öffnungen verwendet werden, welche nach Bedarf angepasst oder eingestellt werden können.

Bei einem Rekuperator 18 in Form eines Plattenwärmetauschers kann verdichterseitig alternativ zur Einleitung des umgeleiteten Massenstroms 24 in den Ringspalt zwischen Rekuperator 18 und Brennkammersystem 28 der Teilmassenstrom auch in eine Sammelleitung zwischen Rekuperator und Ringspalt eingebracht werden.

Der verdichterseitige Bypass kann bei einem Plattenwärmetauscher zum Beispiel auch über eine Verrohrung zwischen der Zuleitung zum Rekuperator und dem Ringspalt der Heißgaszuführung zum Brennkammersystem oder eine Verrohrung zwischen Zuleitung und heißgasseitiger Verrohrung ausgestaltet werden. Abgasseitig kann der Bypass zum Beispiel durch das Anbringen eines Strömungskanals an der Ober- und/oder Unterseite des Rekuperators mit einem Anschluss an den abgasseitigen Zu- und Abströmstutzen realisiert werden.

### BEZUGSZIFFERNLISTE

- 10: Kraft-Wärme-Kopplungssystem
- 12: Gasturbinenvorrichtung
- 14: Kraftwandler (z.B. Generator)
- 16: Abwärmevorrichtung (z.B. Wärmetauscher)
- 18: Rekuperator
- 18a: erster Einlass (Oxidationsmittelstrom)
- 18b: erster Auslass (Oxidationsmittelstrom)
- 18c: zweiter Einlass (Abgasstrom)
- 18d: zweiter Auslass (Abgasstrom)
- 20: Turbinenwelle
- 22: Verdichter
- 24: Oxidationsmittelstrom (z.B. Verbrennungsluftstrom)
- 28: Brennkammersystem
- 30: Turbine
- 32: Abgasstrom
- 34: verdichterseitiger Bypass
- 36: abgasseitiger Bypass
- 38: Steuereinrichtung
- 40: Steuerelement
- 42: Brennstoffleitung
- 44: Steuerelement
- 46: Steuerelement
- 48: Steuerelement
- 50: Steuerelement
- 52: Wärmetauscher
- 54: Diffusor
- 54a: Einströmkanal
- 55: Ringspalt
- 56: innere Hülle
- 58: äußere Hülle
- 60: Verbindungsrohr
- 62: radiale Öffnung
- 64: Drehring
- 66: Öffnung
- 68: Stellstange
- 70: Stellhebel
- 72: Schiebering
- 74: axiale Öffnung
- 76: Lochblende
- 78: Drehlochblende
- 80: Öffnung
- 82: Ventilelement
- 84: Ventilklappe
- 86: Anschlussstutzen
- 87: offenes Ende
- 88: Stellantrieb
- 90: weiterer Anschlussstutzen
- 92: Verschluss
- 94: radiale Strömungsöffnungen
- 95: Drosselblende
- 96: Gegenkontur der Turbine
- 97: Wandvorsprung des Diffusors
- 98: C-Ring-Dichtungen

## Patentansprüche

1. Gasturbinenanordnung, insbesondere Mikrogasturbinenanordnung, aufweisend:
- eine Gasturbinenvorrichtung (12), welche ein Brennkammersystem (28), eine durch einen Abgasstrom (32) des Brennkammersystems angetriebene Turbine (30) und einen Verdichter (22) zum Versorgen des Brennkammersystems mit einem verdichteten Oxidationsmittelstrom (24) aufweist;
- einen Rekuperator (18) mit einem Wärmetauscher (52) zum Übertragen zumindest eines Teils der thermischen Leistung des Abgasstroms (32) der Turbine (30) auf den verdichteten Oxidationsmittelstrom (24);
- wenigstens einen abgasseitigen Bypass (36), der einen zweiten Einlass (18c) des Rekuperators (18) für den Abgasstrom (24) unter Umgehung des Wärmetauschers (52) mit einem zweiten Auslass (18d) des Rekuperators (18) für den Abgasstrom (32) verbindet; und
- wenigstens ein Steuerelement (46) zum Einstellen des Durchflusses durch den wenigstens einen abgasseitigen Bypass (36),
**dadurch gekennzeichnet, dass**
der abgasseitige Bypass (36) in den Rekuperator integriert ist; und
der Rekuperator (18) eine innere Hülle (56) und eine die innere Hülle umgebende äußere Hülle (58) aufweist, wobei die innere Hülle (56) eingangsseitig mit dem zweiten Einlass (18c) des Rekuperators (18) verbunden ist und die äußere Hülle (58) ausgangsseitig mit dem zweiten Auslass (18d) des Rekuperators (18) verbunden ist, und wobei der abgasseitige Bypass (36) das Innere der inneren Hülle (56) in axialer Richtung mit dem Inneren der äußeren Hülle (58) verbindet.

2. Gasturbinenanordnung nach Anspruch 1, **dadurch gekennzeichnet, dass** der Rekuperator (18) koaxial zu einer Turbinenwelle (20) der Gasturbinenvorrichtung (12) neben der Gasturbinenvorrichtung (12) angeordnet ist.

3. Gasturbinenanordnung nach Anspruch 1, **dadurch gekennzeichnet, dass** der Rekuperator (18) in radialer Richtung einer Turbinenwelle (20) der Gasturbinenvorrichtung (12) bevorzugt konzentrisch um die Gasturbinenvorrichtung (12) herum angeordnet ist.

4. Gasturbinenanordnung nach einem der vorhergehenden Ansprüche, **dadurch gekennzeichnet, dass** ferner wenigstens ein verdichterseitiger Bypass (34) vorgesehen ist, der einen ersten Einlass (18a) des Rekuperators (18) für den Oxidationsmittelstrom (24) unter Umgehung des Wärmetauschers (52) des Rekuperators (18) mit einem ersten Auslass (18b) des Rekuperators (18) für den Oxidationsmittelstrom (24) verbindet.

5. Gasturbinenanordnung nach einem der vorhergehenden Ansprüche, **dadurch gekennzeichnet, dass** der Rekuperator (18) einen im Wesentlichen konzentrisch zu einer Turbinenwelle (20) der Gasturbinenvorrichtung (12) verlaufenden Diffusor (54) aufweist, der eingangsseitig mit dem zweiten Einlass (18c) des Rekuperators (18) für den Abgasstrom (32) verbunden ist, wobei der abgasseitige Bypass (36) stromab des Diffusors (54) vorgesehen ist.

6. Gasturbinenanordnung nach einem der vorhergehenden Ansprüche, **dadurch gekennzeichnet, dass** das Stellelement (46) für den abgasseitigen Bypass (36) in den Rekuperator integriert ist und einen strömungstechnisch mit einer axialen Öffnung (74) in der inneren Hülle (56) verbundenen Anschlussstutzen (86), eine in dem Anschlussstutzen (86) angeordnete Ventilklappe (84) und einen weiteren Anschlussstutzen (90), der strömungstechnisch mit einem Zwischenraum zwischen der inneren Hülle (56) und der äußeren Hülle (58) verbunden ist, aufweist.

7. Rekuperator (18) für eine Gasturbinenvorrichtung (12) mit einem Brennkammersystem (28), einer durch einen Abgasstrom (32) des Brennkammersystems angetriebenen Turbine (30) und einem Verdichter (22) zum Versorgen des Brennkammersystems mit einem verdichteten Oxidationsmittelstrom (24), zum Übertragen zumindest eines Teils der thermischen Leistung des Abgasstroms (32) der Turbine (30) auf den verdichteten Oxidationsmittelstrom (24), aufweisend:
- wenigstens einen abgasseitigen Bypass (36), der einen zweiten Einlass (18c) des Rekuperators (18) für den Abgasstrom (24) unter Umgehung eines Wärmetauschers (52) des Rekuperators (18) mit einem zweiten Auslass (18d) des Rekuperators (18) für den Abgasstrom (32) verbindet; und
- wenigstens ein Steuerelement (46) zum Einstellen des Durchflusses durch den wenigstens einen Bypass (36),
**dadurch gekennzeichnet, dass**
der Rekuperator (18) ferner eine innere Hülle (56) und eine die innere Hülle umgebende äußere Hülle (58) aufweist, wobei die innere Hülle (56) eingangsseitig mit dem zweiten Einlass (18c) des Rekuperators (18) verbunden ist und die äußere Hülle (58) ausgangsseitig mit dem zweiten Auslass (18d) des Rekuperators (18) verbunden ist, und wobei der abgasseitige Bypass (36) das Innere der inneren Hülle (56) in axialer Richtung mit dem Inneren der äußeren Hülle (58) verbindet.

8. Kraft-Wärme-Kopplungssystem (10), aufweisend:
- eine Verbrennungskraftmaschine (12);
- einen von der Verbrennungskraftmaschine (12) antreibbaren Kraftwandler (14); und
- eine Abwärmevorrichtung (16) für die Nutzung der im Abgas der Verbrennungskraftmaschine enthaltenen Abwärme,
**dadurch gekennzeichnet, dass**
die Verbrennungskraftmaschine (12) eine Gasturbinenanordnung nach einem der Ansprüche 1 bis 6 ist.

## Claims

1. A gas turbine arrangement, in particular a micro gas turbine arrangement, comprising:
- a gas turbine device (12) comprising a combustor system (28), a turbine (30) driven by an exhaust gas stream (32) of said combustor system, and a compressor (22) for supplying said combustor system with a compressed oxidant stream (24);
- a recuperator (18) having a heat exchanger (52) for transferring at least a portion of the thermal power of said exhaust gas stream (32) of said turbine (30) to said compressed oxidant stream (24);
- at least one exhaust gas-side bypass (36) connecting a second inlet (18c) of said recuperator (18) for said exhaust gas stream (32) to a second outlet (18d) of said recuperator (18) for said exhaust gas stream (32) while bypassing said heat exchanger (52); and
- at least one control element (46) for adjusting the flow through said at least one exhaust gas-side bypass (36),
**characterized in that**
said exhaust gas-side bypass (36) is integrated into said recuperator (18); and said recuperator (18) comprises an inner shell (56) and an outer shell (58) enclosing said inner shell, wherein an inlet side of said inner shell (56) is connected to said second inlet (18c) of said recuperator (18) and an outlet side of said outer shell (58) is connected to said second outlet (18d) of said recuperator (18), and wherein said exhaust gas-side bypass (36) connects the interior of said inner shell (56) in an axial direction to the interior of said outer shell (58).

2. The gas turbine arrangement according to claim 1, **characterized in that** said recuperator (18) is arranged coaxially with a turbine shaft (20) of said gas turbine device (12) and next to said gas turbine device (12).

3. The gas turbine arrangement according to claim 1, **characterized in that** said recuperator (18) is arranged, preferably concentrically, around said gas turbine device (12) in a radial direction of a turbine shaft (20) of said gas turbine device (12).

4. The gas turbine arrangement according to any one of preceding claims, **characterized in that** there is further provided at least one compressor-side bypass (34) connecting a first inlet (18a) of said recuperator (18) for said oxidant stream (24) to a first outlet (18b) of said recuperator (18) for said oxidant stream (24) while bypassing said heat exchanger (52) of said recuperator (18).

5. The gas turbine arrangement according to any one of preceding claims, **characterized in that** said recuperator (18) comprises a diffuser (54) extending substantially concentrically with a turbine shaft (20) of said gas turbine device (12), an inlet side of said diffuser being connected to said second inlet (18c) of said recuperator (18) for said exhaust gas stream (32), wherein said exhaust gas-side bypass (36) is provided downstream of said diffuser (54).

6. The gas turbine arrangement according to any one of preceding claims, **characterized in that** said control element (46) for said exhaust gas-side bypass (36) is integrated into said recuperator and comprises a connecting piece (86) being fluidically connected to an axial opening (74) in said inner shell (56), a valve flap (84) arranged in said connecting piece (86), and a further connecting piece (90) being fluidically connected to an intermediate space between said inner shell (56) and said outer shell (58).

7. A recuperator (18) for a gas turbine device (12) having a combustor system (28), a turbine (30) driven by an exhaust gas stream (32) of said combustor system, and a compressor (22) for supplying said combustor system with a compressed oxidant stream (24), said recuperator being configured to transfer at least a portion of the thermal power of said exhaust gas stream (32) of said turbine (30) to said compressed oxidant stream (24), comprising:
- at least one exhaust gas-side bypass (36) connecting a second inlet (18c) of said recuperator (18) for said exhaust gas stream (32) to a second outlet (18d) of said recuperator (18) for said exhaust gas stream (32) while bypassing a heat exchanger (52) of said recuperator (18); and
- at least one control element (46) for adjusting the flow through said at least one bypass (36),
**characterized in that**
said recuperator (18) further comprises an inner shell (56) and an outer shell (58) enclosing said inner shell, wherein an inlet side of said inner shell (56) is connected to said second inlet (18c) of said recuperator (18) and an outlet side of said outer shell (58) is connected to said second outlet (18d) of said recuperator (18), and wherein said exhaust gas-side bypass (36) connects the interior of said inner shell (56) in an axial direction to the interior of said outer shell (58).

8. A power-heat cogeneration system, comprising:
- an internal combustion engine (12);
- a transducer (14) driven by said internal combustion engine (12); and
- a waste heat device (16) using the waste heat included in the exhaust gas of said internal combustion engine,
**characterized in that**
said internal combustion engine (12) is a gas turbine arrangement according to any one of claims 1 to 6.

## Revendications

1. Ensemble de turbine à gaz, in particulier micro-ensemble de turbine à gaz, comprenant :
- un dispositif de turbine à gaz (12), lequel comprend un système de chambre de combustion (28), une turbine (30) entraînée par un flux de gaz d'échappement (32) du système de chambre de combustion, et un compresseur (22) pour alimenter le système de chambre de combustion en flux oxydant compressé (24) ;
- un récupérateur (18) ayant un échangeur de chaleur (52) pour transférer au moins une partie de la puissance thermique du flux de gaz d'échappement (32) de la turbine (30) sur le flux oxydant compressé (24) ;
- au moins une dérivation côté gaz d'échappement (36) qui relie, en contournant l'échangeur de chaleur (52), une deuxième entrée (18c) du récupérateur (18) pour le flux de gaz d'échappement (32) à une deuxième sortie (18d) du récupérateur (18) pour le flux de gaz d'échappement (32) ; et
- au moins un élément de commande (46) pour régler le débit à travers ladite au moins une dérivation côté gaz d'échappement (36),
**caractérisé en ce que**
la dérivation côté gaz d'échappement (36) est intégrée au récupérateur ; et
le récupérateur (18) comprend une enveloppe intérieure (56) et une enveloppe extérieure (58) qui entoure l'enveloppe intérieure, dans lequel l'enveloppe intérieure (56) est reliée côté entrée à la deuxième entrée (18c) du récupérateur (18) et l'enveloppe extérieure (58) est reliée côté sortie à la deuxième sortie (18d) du récupérateur (18), et dans lequel la dérivation côté gaz d'échappement (36) relie l'intérieur de l'enveloppe intérieure (56) en direction axiale à l'intérieur de l'enveloppe extérieure (58).

2. Ensemble de turbine à gaz selon la revendication 1, **caractérisé en ce que** le récupérateur (18) est disposé à côté du dispositif de turbine à gaz (12) de manière coaxiale à un arbre de turbine (20) du dispositif de turbine à gaz (12).

3. Ensemble de turbine à gaz selon la revendication 1, **caractérisé en ce que** le récupérateur (18) est disposé de préférence de manière concentrique autour du dispositif de turbine à gaz (12) dans la direction radiale d'un arbre de turbine (20) du dispositif de turbine à gaz (12).

4. Ensemble de turbine à gaz selon l'une des revendications précédentes, **caractérisé en ce qu'**est prévue en outre au moins une dérivation côté compresseur (34) qui relie, en contournant l'échangeur de chaleur (52) du récupérateur (18), une première entrée (18a) du récupérateur (18) pour le flux oxydant compressé (24) à une première sortie (18b) du récupérateur (18) pour le flux oxydant compressé (24).

5. Ensemble de turbine à gaz selon l'une des revendications précédentes, **caractérisé en ce que** le récupérateur (18) comprend un diffuseur (54), lequel s'étend de manière essentiellement concentrique à un arbre de turbine (20) du dispositif de turbine à gaz (12), et est relié côté entrée à la deuxième entrée (18c) du récupérateur (18) pour le flux de gaz d'échappement (32), dans lequel la dérivation côté gaz d'échappement (36) est prévue en aval du diffuseur (54).

6. Ensemble de turbine à gaz selon l'une des revendications précédentes, **caractérisé en ce que** l'élément de commande (46) pour la dérivation côté gaz d'échappement (36) est intégrée au récupérateur et comprend un embout de raccordement (86) qui est relié par dynamique des fluides à une ouverture axiale (74) dans l'enveloppe intérieure (56), un clapet de soupape (84) disposé dans l'embout de raccordement (86), et un autre embout de raccordement (90) qui est relié par dynamique des fluides à un espace intermédiaire entre l'enveloppe intérieure (56) et l'enveloppe extérieure (58).

7. Récupérateur (18) pour un dispositif de turbine à gaz (12) ayant un système de chambre de combustion (28), une turbine (30) entraînée par un flux de gaz d'échappement (32) du système de chambre de combustion, et un compresseur (22) pour alimenter le système de chambre de combustion en flux oxydant compressé (24), ledit récupérateur étant destiné à transférer au moins une partie de la puissance thermique du flux de gaz d'échappement (32) de la turbine (30) sur le flux oxydant compressé (24) et comprenant :
- au moins une dérivation côté gaz d'échappement (36) qui relie, en contournant un échangeur de chaleur (52) du récupérateur (18), une deuxième entrée (18c) du récupérateur (18) pour le flux de gaz d'échappement (32) à une deuxième sortie (18d) du récupérateur (18) pour le flux de gaz d'échappement (32) ; et
- au moins un élément de commande (46) pour régler le débit à travers ladite au moins une dérivation (36),
**caractérisé en ce que**
le récupérateur (18) comprend en outre une enveloppe intérieure (56) et une enveloppe extérieure (58) qui entoure l'enveloppe intérieure, dans lequel l'enveloppe intérieure (56) est reliée côté entrée à la deuxième entrée (18c) du récupérateur (18) et l'enveloppe extérieure (58) est reliée côté sortie à la deuxième sortie (18d) du récupérateur (18), et dans lequel la dérivation côté gaz d'échappement (36) relie l'intérieur de l'enveloppe intérieure (56) en direction axiale à l'intérieur de l'enveloppe extérieure (58).

8. Système de cogénération de chaleur et électricité (10) comprenant :
- un moteur à combustion interne (12) ;
- un transducteur de force (14) pouvant être entraîné par le moteur à combustion interne (12) ; et
- un dispositif de chaleur perdue (16) pour l'utilisation de la chaleur perdue contenue dans le gaz d'échappement du moteur à combustion interne,
**caractérisé en ce que**
le moteur à combustion interne (12) est un ensemble de turbine à gaz selon l'une des revendications 1 à 6.
